# FASCICULE DE BREVET EUROPEEN

(11) **EP 2 872 409 B1**
(45) Date de publication et mention de la délivrance du brevet: **18.05.2016**
(21) Numéro de dépôt: 13756559.4
(22) Date de dépôt: 09.07.2013
(51) Int. Cl.: B65D 5/56, B65D 5/66, B65D 25/14, B65D 75/32

(54) **EMBALLAGE DU TYPE BOITE BI-MATIERES, POUR LE CONDITIONNEMENT D'UN PRODUIT, ET PROCÉDÉ DE FABRICATION**
KASTENFÖRMIGE VERPACKUNG AUS ZWEI MATERIALIEN ZUM VERPACKEN EINES PRODUKTES, UND HERSTELLUNGSVERFAHREN
PACKAGE OF THE TWO-MATERIAL BOX TYPE FOR PACKAGING A PRODUCT, AND METHOD OF MANUFACTURE

(30) Priorité: 10.07.2012 FR 1256620
(43) Date de publication de la demande: 20.05.2015
(73) Titulaire: Dropsy, Philippe, 17200 Royan (FR); Dropsy, Marie-Claude, 17200 Royan (FR)
(72) Inventeur: Dropsy, Philippe, 17200 Royan (FR); Dropsy, Marie-Claude, 17200 Royan (FR)
(74) Mandataire: Coralis Harle
(86) Numéro de dépôt international: PCT/FR2013/051642
(87) Numéro de publication internationale: WO 2014/009655

(56) Documents cités:
- DE-U1- 9 203 598
- FR-A1- 2 826 938

## Description

La présente invention concerne les emballages du type boîtes bi-matières, adaptés pour le conditionnement d'un produit, en particulier d'une denrée alimentaire.

Les emballages bi-matières se composent très généralement d'une enveloppe extérieure, réalisée dans un matériau relativement rigide comme par exemple du carton, qui est recouverte intérieurement par un film plastique étanche destiné à assurer l'étanchéité.

Pour le conditionnement de certaines denrées alimentaires, par exemple les hamburgers ou certains fromages, l'enveloppe extérieure se compose avantageusement de deux parties d'enveloppe, formant fond et couvercle, raccordés par des moyens charnière, qui sont manoeuvrables l'une par rapport à l'autre entre deux positions :
- une position fermée, maintenue par des moyens de verrouillage désactivables, pour définir ensemble un volume de conditionnement fermé destiné à contenir ladite denrée alimentaire, et
- une position ouverte, pour autoriser l'accès à ce volume de conditionnement.

Pour cela, l'enveloppe extérieure consiste actuellement en une pièce monobloc, dont les deux parties d'enveloppe sont raccordées par une ligne de pliage monobloc constituant les moyens formant charnière.

Cette structure, avec une ligne de pliage monobloc, est adaptée pour certaines formes d'emballages.

Mais pour des petits emballages, ou des emballages de formes spéciales, cette structure n'est pas totalement satisfaisante ; en particulier, la mise en volume de l'enveloppe extérieure, avec ses deux parties d'enveloppe reliées par la ligne de pliage, est en pratique relativement complexe à mettre en oeuvre.

Un emballage tel que défini au préambule de la revendication 1 est illustré dans le document DE 92 03598 U1.

La présente invention a pour but de pallier ces inconvénients en proposant une nouvelle structure d'emballage du type boîte bi-matières qui peut être fabriquée facilement dans de nombreuses formes, et dans une grande plage de dimensions, en particulier dans des dimensions réduites.

Pour cela, dans l'emballage bi-matières selon l'invention, les deux parties d'enveloppe sont constituées par deux pièces distinctes, et le film plastique étanche monobloc comporte une bande de matière intercalaire, s'étendant entre lesdites parties d'enveloppe distinctes, pour constituer les moyens charnière précités.

Le fait de réaliser l'enveloppe extérieure en deux parties permet la fabrication d'emballages bi-matières en particulier de formes très variables et de dimensions réduites, ceci avec les installations de montage habituelles ; et on utilise alors le film plastique intérieur pour constituer la charnière d'assemblage des deux parties d'enveloppe.

D'autres caractéristiques avantageuses de l'invention, pouvant être prises indépendamment ou en combinaison, sont précisées ci-dessous :
- en position fermée, l'enveloppe extérieure présente deux parois de fond en regard qui sont raccordées par une paroi latérale ; les deux parties d'enveloppe comportent chacune un panneau formant l'une desdites parois de fond ; et l'une au moins desdites parties d'enveloppe comporte une paroi latérale prolongeant son panneau de fond pour former au moins une partie de la hauteur de ladite paroi latérale ; dans ce cas, les deux parties d'enveloppe ont de préférence des formes identiques ou au moins approximativement identiques, l'une par rapport à l'autre, comprenant chacune un panneau de fond prolongé par une paroi latérale ;
- chaque partie d'enveloppe est délimitée par une bordure périphérique s'étendant dans un plan ; d'autre part, le film plastique étanche comporte deux bandes latérales saillantes, formant trottoirs, qui se prolongent chacune au-delà de la bordure périphérique de la partie d'enveloppe et qui s'étendent chacune dans ou au moins sensiblement dans le plan de la partie d'enveloppe associée, lesquelles deux bandes latérales saillantes sont superposées l'une sur l'autre lors de la manoeuvre en position fermée desdites parties d'enveloppe, pour leur assemblage de manière étanche par des moyens de solidarisation dégradables ;
- la bande intercalaire du film plastique étanche, formant lesdits moyens charnière, comporte une moulure longitudinale définissant l'axe de rotation entre les deux parties d'enveloppe, laquelle moulure longitudinale s'étend entre les deux parties d'enveloppe et présente une section courbe s'ouvrant du côté d'une surface supérieure dudit film plastique étanche ; dans ce cas, les bandes latérales saillantes des deux parties d'enveloppe prolongent cette bande intercalaire formant les moyens charnière, et de préférence seules lesdites bandes latérales saillantes sont assemblées l'une avec l'autre par des moyens de solidarisation dégradables et hermétiques ;
- la bande intercalaire du film plastique étanche, formant lesdits moyens charnière, comporte une ligne d'amorce de rupture définissant l'axe d'articulation entre les deux parties d'enveloppe, laquelle ligne d'amorce de rupture s'étend entre les deux parties d'enveloppe et divise ladite bande intercalaire en deux tronçons longitudinaux destinées à se superposer en position fermée ; dans ce cas, les bandes latérales saillantes des deux parties d'enveloppe prolongent la bande intercalaire formant les moyens charnière, lesdites bandes latérales saillantes et les deux tronçons longitudinaux de la bande intercalaire étant assemblés par des moyens de solidarisation dégradables et hermétiques ;
- les parties d'enveloppe sont assemblées avec le film plastique étanche par le biais de moyens d'adhésion ;
- les parties d'enveloppe consistent chacune en une pièce réalisée à base de fibres de bois, par exemple en carton.

La présente invention concerne également un procédé pour l'obtention d'un emballage du type boîte bi-matières tel que défini ci-dessus, comprenant au moins les étapes successives suivantes :
- la fourniture des deux parties d'enveloppe distinctes, et du film plastique étanche monobloc, puis
- l'assemblage des deux parties d'enveloppe et du film plastique étanche monobloc, lequel film plastique étanche est rapporté de sorte à ménager une bande intercalaire entre lesdites parties d'enveloppe constituant les moyens charnière.

Dans ce cas, le film plastique étanche est avantageusement assemblé sur les deux parties d'enveloppe par une opération de thermoformage, en combinaison avec des moyens d'adhésion.

L'invention sera encore illustrée, sans être aucunement limitée, par la description suivante d'une forme de réalisation particulière, cela en relation avec les dessins annexés dans lesquels :
- la figure 1 représente très schématiquement, et selon un plan de coupe longitudinal, l'emballage selon l'invention en position fermée ;
- la figure 2 représente l'emballage de la figure 1 en position fermée, vu de dessus ;
- les figures 3 et 4 illustrent un procédé pour l'obtention de l'emballage selon les figures 1 et 2, respectivement avant et après une opération de thermoformage du film plastique étanche sur les deux parties d'enveloppe juxtaposées ;
- la figure 5 est une vue de dessus de la figure 4, montrant l'emballage en position ouverte ;
- la figure 6 illustre une forme de réalisation particulière de la bande intercalaire du film plastique étanche constituant les moyens charnière.

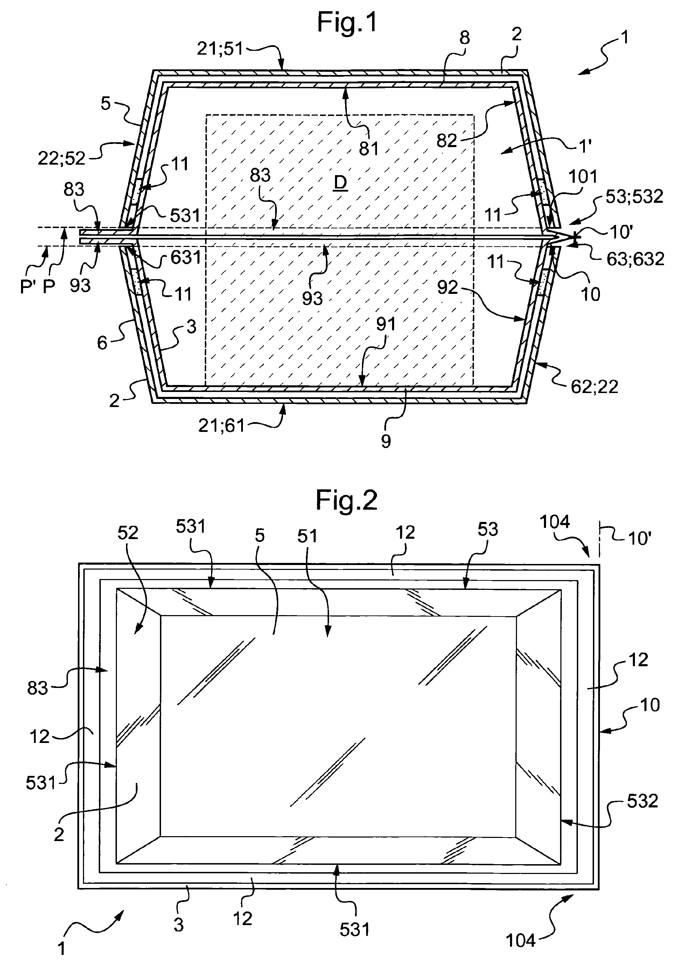

L'emballage 1 du type boîte, tel que représenté en position fermée sur les figures 1 et 2, définit un volume de conditionnement ou de stockage 1' destiné à contenir un produit D (représentée très schématiquement sur la figure 1).

Cet emballage 1 est tout particulièrement adapté pour le conditionnement d'un hamburger, d'un sandwich ou d'un fromage, mais peut recevoir toute autre denrée alimentaire souhaitée.

Cet emballage 1, du type bi-matières, comprend une enveloppe extérieure 2 qui est recouverte intérieurement par un film plastique étanche monobloc 3.

La structure de cet emballage 1 est décrite ci-dessous en relation avec les figures 1 et 2.

On notera que la figure 1 illustre l'emballage de manière schématique, pour bien montrer sa structure, sans tenir compte des échelles relatives entre les épaisseurs des parties d'enveloppe, du film plastique associé et de leurs moyens de solidarisation.

L'enveloppe extérieure 2 se compose de deux parties d'enveloppe qui sont constituées par des pièces distinctes : une partie d'enveloppe supérieure 5 constituée par une première pièce, et une partie d'enveloppe inférieure 6 constituée par une seconde pièce.

Les deux parties d'enveloppe 5 et 6 sont « distinctes », en ce sens qu'elles ne constituent pas une pièce monobloc. Elles ne sont pas raccordées directement entre elles par un élément structurel monobloc, par exemple par le biais d'une ligne de pliage monobloc.

Ces deux parties d'enveloppe 5, 6 sont donc élaborées chacune par la mise en volume d'un flan de carton convenablement découpé et rainé, par exemple du carton compact ou ondulé, avantageusement de type carton recyclable ; elles peuvent aussi être obtenues par moulage d'une pâte à papier.

De manière alternative, ces parties d'enveloppe 5, 6 peuvent être réalisées en un matériau plastique alvéolaire ; elles peuvent aussi être réalisées par l'association de deux matériaux, par exemple d'un mixte carton/bois déroulé.

De manière générale, la nature et l'épaisseur du matériau constituant les parties d'enveloppe 5 et 6 sont choisies notamment selon les dimensions de l'emballage 1, et selon sa destination.

Les deux parties d'enveloppe 5 et 6 ont ici des formes identiques l'une par rapport à l'autre.

Elles se présentent chacune sous la forme générale d'une barquette qui se compose d'un panneau de fond 51, 61 prolongé par une paroi latérale 52, 62.

Chaque partie d'enveloppe 5, 6 est ici en forme générale de tronc de pyramide ; mais d'autres formes polygonales sont envisageables (octogonale par exemple).

La paroi latérale 52, 62 de ces deux parties d'enveloppe 5, 6 se termine chacune par une bordure libre 53, 63, ménagée à distance de leurs panneaux de fond 51, 61 respectifs.

La bordure libre 53, 63 de chaque partie d'enveloppe 5, 6 s'étend respectivement dans, ou au moins sensiblement dans, un plan P, P'.

Le film plastique étanche monobloc 3 est également réalisé en un matériau approprié, de préférence en polypropylène, éventuellement complexé avec d'autres matériaux selon les besoins.

De manière générale, la nature et l'épaisseur du matériau constituant le film plastique monobloc 3 sont choisies notamment selon les dimensions de l'emballage 1 et selon sa destination.

Ce film plastique étanche 3 consiste en une pièce monobloc continue recouvrant les deux parties d'enveloppe 5 et 6.

Ce film plastique étanche 3 peut être considéré comme divisé en différentes parties visibles sur la figure 1, à savoir :
- deux parties de film 8 et 9, recouvrant chacune intérieurement l'une des deux parties d'enveloppe 5 et 6, et
- une bande intercalaire 10, raccordant les deux parties de film 8, 9 et s'étendant entre les deux parties d'enveloppe 5, 6 pour constituer des moyens charnière, pour leur manoeuvre manuelle en pivotement l'une par rapport à l'autre.

Chaque partie de film 8 ou 9, épousant intérieurement l'une des parties d'enveloppe 5 ou 6, se compose également d'un panneau de fond 81, 91 (formant la couche intérieure du panneau de fond 51, 61 des parties d'enveloppe 5, 6) raccordé à une paroi latérale 82, 92 (formant la couche intérieure de la paroi latérale 52, 62 de la partie d'enveloppe 5, 6 associée).

Ces parties de film 8 et 9 sont assemblées et maintenues avec leurs parties d'enveloppe 5 et 6 respectives, par une ou plusieurs zones d'adhésion 11, par exemple des zones de collage ou de thermosoudage.

Les zones d'adhésion 11 sont de préférence réparties pour faciliter la séparation ultérieure des parties d'enveloppe 5, 6 par rapport au film plastique 3, de manière à permettre ensuite leur recyclage.

Ces zones d'adhésion 11 sont agencées par exemple au niveau des parois latérales 52/82 et 62/92 attenantes.

Les zones d'adhésion 11 consistent avantageusement en des lignes ou bandes, continues ou discontinues, localisées du côté de la bordure supérieure 53, 63 des parois latérales 52/82 et 62/92 en regard.

De manière optionnelle (ou éventuellement alternative), les parties d'enveloppe 5, 6 et les parties 8, 9 associées du film plastique 3 peuvent être solidarisées entre elles par une ou plusieurs zones d'adhésion localisées au niveau des panneaux de fond 51/81 et 61/91 en regard (de préférence du côté de la partie centrale de ces panneaux de fond).

Chaque partie de film 8, 9 comporte encore une bande latérale saillante 83, 93, formant trottoir, intervenant ici pour la fermeture de l'emballage 1.

Chaque bande latérale saillante 83, 93 recouvre et se prolonge au-delà d'une première portion 531, 631 de la bordure périphérique 53, 63 de la partie d'enveloppe 5, 6 associée (cette première portion 531, 631 se compose de plusieurs arêtes supérieures, ici trois arêtes supérieures).

Chaque bande latérale saillante 83, 93 s'étend dans, ou au moins sensiblement dans, le plan P, P' de la partie d'enveloppe 5, 6 associée.

La bande intercalaire 10, formant les moyens charnière, est apte à subir un phénomène de pliage en deux, par phénomène de flexion sur elle-même, pour définir un axe de rotation 10' entre les deux parties d'enveloppe 5, 6 qui lui sont associées.

Cet axe de rotation 10' consiste en une sorte de ligne de pliage qui est ménagée entre les deux parties d'enveloppe 5, 6.

A cet égard, la bande intercalaire 10 présente une forme générale rectangulaire dont les bordures longitudinales 101 sont chacune raccordées à l'une des parties de film 8, 9 et recouvrent chacune une seconde portion 532, 632 de la bordure périphérique 53, 63 de l'une des parties d'enveloppe 5, 6.

Ces secondes portions 532, 632 des parties d'enveloppe 5, 6 consistent ici en deux arêtes qui sont juxtaposées, s'étendant parallèlement et à proximité l'une de l'autre en position ouverte.

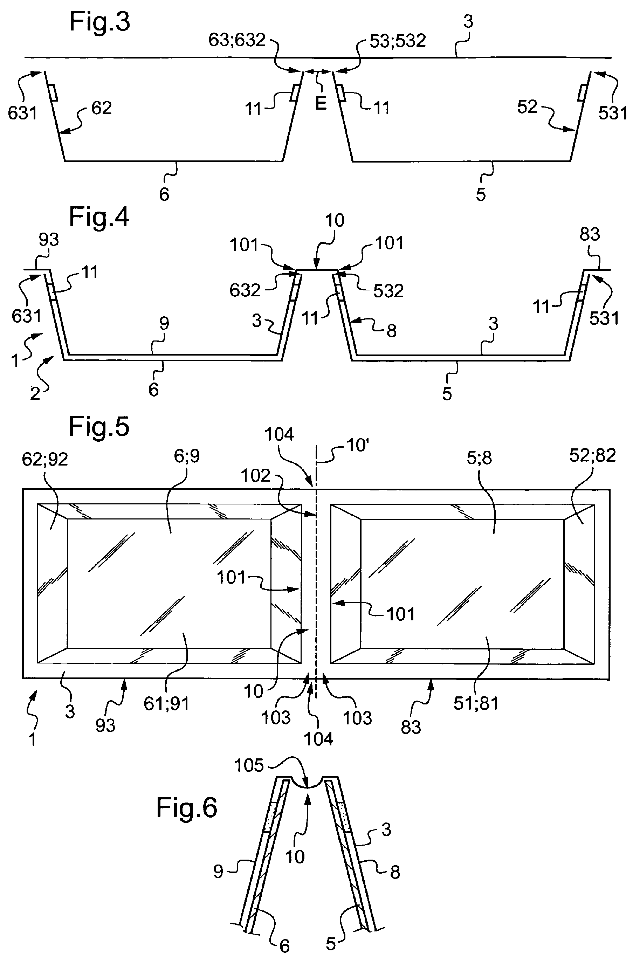

Comme illustré schématiquement sur la figure 5, cette bande intercalaire 10 peut comporter une ligne d'amorce de rupture 102 définissant l'axe de rotation 10' entre les deux parties d'enveloppe 5, 6.

Cette ligne d'amorce de rupture 102 s'étend entre les deux parties d'enveloppe 5, 6 et divise la bande intercalaire 10 en deux tronçons longitudinaux 103 raccordés chacun à l'une des parties de film 8, 9.

L'axe de rotation/pivotement 10' s'étend ainsi avantageusement selon un axe de symétrie de cette bande intercalaire 10, parallèlement aux deux bordures longitudinales 101 et de manière équidistante à ces dernières.

Au niveau de ses extrémités 104, cette bande intercalaire 10 est encore raccordée aux bandes latérales saillantes 83, 93 qui prolongent la bordure supérieure des parties d'enveloppe 5, 6 (comme on peut le voir en particulier sur la figure 5).

Cette forme de réalisation présente l'intérêt de constituer une continuité dans les bandes saillantes, permettant d'obtenir une étanchéité parfaite lors du verrouillage désactivable de la partie supérieure avec la partie inférieure.

Les parties d'enveloppe 5, 6, ainsi que les parties de film 8, 9 qui leur sont associées, sont ainsi manoeuvrables manuellement en pivotement autour de l'axe de rotation 10' entre :
- une position fermée (figures 1 et 2), maintenue ainsi par des moyens de verrouillage désactivables (décrits plus en détails par la suite) pour définir ensemble le volume de stockage fermé 1', et
- une position ouverte (figures 4 et 5), pour autoriser l'accès à ce volume de stockage 1'.

En position ouverte, les deux parties d'enveloppe 5, 6 sont reliées entre elles uniquement par la bande intercalaire 10 du film plastique étanche 3.

Une denrée alimentaire peut alors être déposée sur la partie de film 8, 9 de l'une des parties d'enveloppe 5, 6.

Pour obtenir la position fermée, les deux parties d'enveloppe 5, 6 sont ensuite manoeuvrées l'une par rapport à l'autre par le pliage de la bande intercalaire 10, selon l'axe de rotation 10'.

Ces deux parties d'enveloppe 5, 6 viennent alors se positionner en regard l'une de l'autre, avec leurs panneau de fond 51, 61 en regard et à distance l'un de l'autre.

Les bordures périphériques 53, 63 de leurs parois latérales 52, 62 viennent se juxtaposer ; elles sont ici séparées uniquement par les bandes latérales saillantes 83, 93 superposées l'une sur l'autre et aussi par la bande intercalaire 10 repliée vers l'extérieur.

Les plans P, P' des deux parties d'enveloppe 5, 6 s'étendent ainsi parallèlement l'un par rapport à l'autre, et avantageusement de manière confondue ou au moins approximativement confondue.

Les parties d'enveloppe 5, 6 constituent alors ensemble l'enveloppe extérieure 2 de l'emballage qui se compose :
- de deux parois de fond 21, constituées chacune par le panneau de fond 51, 61 de l'une des parties d'enveloppe 5, 6, et
- d'une paroi latérale 22, constituée par les parois latérales juxtaposées 52, 62 des deux parties d'enveloppe 5, 6 (la paroi latérale 52, 62 d'une partie d'enveloppe 5, 6 constitue une partie de la hauteur de la paroi latérale 22 de l'enveloppe extérieure 2).

Pour maintenir cette position fermée, les bandes latérales saillantes superposées 83, 93 des deux parties d'enveloppe 5, 6 sont assemblées l'une avec l'autre par des moyens de solidarisation 12, dégradables et hermétiques, par exemple par une bande de liaison continue qui est obtenue par thermosoudage ou par le biais d'une colle thermo-activable.

Cette bande de liaison 12 comporte avantageusement une zone de moindre résistance, ménagée avantageusement dans un angle, à l'opposé de la bande intercalaire 10 formant les moyens charnière, pour faciliter sa manoeuvre en position ouverte.

La bande de liaison 12 est ici appliquée également au niveau de la bande intercalaire 10 pour assurer l'étanchéité complète du volume de stockage 1'. Les deux tronçons longitudinaux 103 de la bande intercalaire 10 sont ainsi superposés et assemblés l'un avec l'autre, par la bande de liaison 12 dégradable et hermétique.

La bande de liaison 12 consiste ainsi en une bande continue fermée, ou boucle, ici de forme générale rectangulaire, s'étendant sur tout le pourtour de l'enveloppe extérieure 2.

Pour accéder au produit, il suffit ensuite d'exercer une traction sur les deux bandes latérales saillantes 83, 93, avantageusement au niveau de la zone de moindre résistance, de manière à dégrader la bande de liaison 12 et à autoriser un retour de l'emballage 1 en position ouverte par pivotement des parties d'enveloppe 5, 6 au niveau de la bande intercalaire 10.

De manière alternative, ces moyens de solidarisation 12 peuvent être constitués par des structures complémentaires équipant les deux parties d'enveloppe 5, 6 et destinées à venir s'emboîter lors de la manoeuvre en position fermée.

Un procédé pour l'obtention d'un tel emballage 1 est décrit ci-dessous en relation avec les figures 3 et 4.

Ce procédé commence par la fourniture des différentes pièces constitutives de cet emballage 1, à savoir :
- les deux parties d'enveloppe 5, 6 distinctes, constituées par exemple chacune par un flan de carton préalablement mis en volume, et
- le film plastique étanche monobloc 3.

Les deux parties d'enveloppe 5, 6 sont juxtaposées l'une par rapport à l'autre, tout en ménageant entre elles un espace horizontal E entre l'un des côtés de leurs bordures périphériques 53, 63 respectives. Cet espace horizontal E est destiné à définir la largeur de la bande intercalaire 10 du film plastique étanche 3, pour former la charnière de l'emballage.

Ces parties d'enveloppe 5, 6 sont pour cela rapportées dans un moule de thermoformage comportant deux emplacements destinés à recevoir chacun l'une desdites parties d'enveloppe 5, 6.

Avant la pose du film plastique étanche 3, les parties d'enveloppe 5, 6 sont avantageusement encollées, ici au niveau de l'intérieur de leurs parois latérales 52, 62 selon les zones d'adhésion 11 précitées.

L'adhésion entre les parties d'enveloppe 5,6 et le film plastique 3 peut être réalisée par les caractéristiques de ce film, celui-ci pouvant comporter une face adhérente, réactivable à la chaleur.

Le film plastique étanche monobloc 3 est ensuite rapporté sur ces deux parties d'enveloppe 5, 6 par le biais d'une opération de thermoformage, pour constituer directement les deux parties de film 8, 9 épousant les parties d'enveloppe 5, 6 associées.

Cette pose du film plastique 3 permet encore d'obtenir, comme on peut le voir sur les figures 4 et 5, les bandes suivantes :
- la bande intercalaire 10 entre les deux parties d'enveloppe 5, 6, s'étendant le long des secondes portions 532, 632 de leurs bordures périphériques 53, 63, et
- les bandes latérales saillantes 83, 93 au niveau de chacune de ses parties d'enveloppe 5, 6, le long des premières portions 531, 631.

Ce procédé permet ainsi d'obtenir l'emballage 1 selon l'invention, à l'origine en position ouverte.

Une autre forme particulière de réalisation de la bande intercalaire 10 du film plastique étanche 3 est illustrée sur la figure 6.

En l'occurrence, cette bande intercalaire 10 comporte une moulure longitudinale 105 s'étendant entre les deux parties d'enveloppe 5, 6. Les extrémités 104 de cette bande intercalaire 10 sont là encore raccordées à des bandes latérales saillantes 53, 63 formant trottoir.

Cette moulure 105 présente une section courbe, par exemple en arc de cercle, s'ouvrant du côté de la surface supérieure du film plastique étanche 3 (s'étendant à l'opposé des parties d'enveloppe 5, 6 associées).

Cette forme de réalisation permet d'obtenir une bande intercalaire relativement étroite (par exemple de l'ordre de 1 à 5 mm de large) apte à générer l'axe de rotation 10'.

Cette forme de réalisation présente l'intérêt d'utiliser un minimum de film pour l'effet recherché.

Dans ce cas, pour la fermeture étanche de l'emballage 1, la bande de liaison 12 est ménagée au niveau des bandes latérales saillantes superposées 83, 93 et se termine au niveau des extrémités latérales 104 de la bande intercalaire 10.

La bande de liaison 12 consiste ainsi en une bande continue ouverte, ici en forme générale de U, s'étendant sur une partie du pourtour de l'enveloppe extérieure 2.

Selon encore une variante de réalisation non représentée, l'une des parties d'enveloppe de l'emballage se distingue de la forme de réalisation décrite ci-dessus en relation avec les figures 1 à 6 en ce qu'elle se compose uniquement d'un panneau de fond (désigné par le repère 51 ou 61), dépourvu de paroi latérale (désignée par le repère 52 ou 62), pour former une sorte de couvercle plan mobile en pivotement par rapport à l'autre partie d'enveloppe en forme de barquette.

Là encore, ces deux parties d'enveloppe peuvent être maintenues ensemble en position fermée par la solidarisation de leurs bandes latérales saillantes superposées.

## Revendications

1. Emballage du type boîte bi-matières pour le conditionnement d'un produit, lequel emballage (1) comprend une enveloppe extérieure (2) qui se compose de deux parties d'enveloppe (5, 6) reliées par des moyens (10) formant charnière pour leur manoeuvre entre deux positions: - une position fermée, maintenue par des moyens de verrouillage (12) désactivables, pour définir ensemble un volume de stockage fermé (1') destiné à contenir ledit produit, et - une position ouverte, pour autoriser l'accès audit volume de stockage (1'), lesquelles deux parties d'enveloppe (5, 6) sont recouvertes intérieurement par un même film plastique étanche monobloc (3),
**caractérisé en ce que** lesdites deux parties d'enveloppe (5, 6) sont constituées par deux pièces distinctes, et **en ce que** ledit film plastique étanche (3) comporte une bande intercalaire (10), s'étendant entre lesdites deux parties d'enveloppe distinctes (5, 6), pour constituer lesdits moyens charnière.

2. Emballage du type boîte bi-matières selon la revendication 1, **caractérisé en ce que**, en position fermée, l'enveloppe extérieure (2) présente deux parois de fond (21) en regard qui sont raccordées par une paroi latérale (22), **en ce que** les deux parties d'enveloppe (5, 6) comportent chacune un panneau (51, 61) formant l'une desdites parois de fond (21), et **en ce que** l'une au moins desdites parties d'enveloppe (5, 6) comporte une paroi latérale (52, 62) prolongeant son panneau de fond (51, 61) pour former au moins une partie de la hauteur de ladite paroi latérale (22).

3. Emballage du type boîte bi-matières selon la revendication 2, **caractérisé en ce que** les deux parties d'enveloppe (5, 6) ont des formes identiques ou au moins approximativement identiques, l'une par rapport à l'autre, comprenant chacune un panneau de fond (51, 61) prolongé par une paroi latérale (52, 62).

4. Emballage du type boîte bi-matières selon l'une quelconque des revendications 1 à 3, **caractérisé en ce que** chaque partie d'enveloppe (5, 6) est délimitée par une bordure périphérique (53, 63) s'étendant dans un plan (P, P'), **en ce que** le film plastique étanche (3) comporte deux bandes latérales saillantes (83, 93), formant trottoirs, qui se prolongent chacune au-delà de la bordure périphérique (53, 63) de la partie d'enveloppe associée (5, 6) et qui s'étendent chacune dans ou au moins sensiblement dans le plan (P, P') de la bordure périphérique de la partie d'enveloppe associée, lesquelles deux bandes latérales saillantes (83, 93) sont superposées l'une sur l'autre lors de la manoeuvre en position fermée desdites parties d'enveloppe (5, 6), pour leur assemblage de manière étanche par des moyens de solidarisation dégradables (12) formant les moyens de verrouillage amovibles.

5. Emballage du type boîte bi-matières selon l'une quelconque des revendications 1 à 4, **caractérisé en ce que** la bande intercalaire (10) du film plastique étanche (3), formant lesdits moyens charnière, comporte une moulure longitudinale (105) définissant l'axe de rotation (10') entre les deux parties d'enveloppe (5, 6), laquelle moulure longitudinale (105) s'étend entre les deux parties d'enveloppe (5, 6) et présente une section courbe s'ouvrant du côté d'une surface supérieure dudit film plastique étanche (3).

6. Emballage du type boîte bi-matières selon l'une quelconque des revendications 1 à 4, **caractérisé en ce que** la bande intercalaire (10) du film plastique étanche (3), formant lesdits moyens charnière, comporte une ligne d'amorce de rupture (102) définissant l'axe d'articulation (10') entre les deux parties d'enveloppe (5, 6), laquelle ligne d'amorce de rupture (102) s'étend entre les deux parties d'enveloppe (5, 6) et divise ladite bande intercalaire en deux tronçons longitudinaux (103) destinées à se superposer en position fermée.

7. Emballage du type boîte bi-matières selon l'une quelconque des revendications 1 à 6, **caractérisé en ce que** les parties d'enveloppe (5, 6) sont assemblées avec le film plastique étanche (3) par le biais de moyens d'adhésion (11).

8. Emballage du type boîte bi-matières selon l'une quelconque des revendications 1 à 7, **caractérisé en ce que** les parties d'enveloppe (5, 6) consistent chacune en une pièce réalisée à base de fibres de bois, par exemple en carton.

9. Procédé pour l'obtention d'un emballage du type boîte bi-matières selon l'une quelconque des revendications 1 à 8, **caractérisé en ce qu'**il comprend au moins les étapes successives suivantes :
- la fourniture des deux parties d'enveloppe distinctes (5, 6), et du film plastique étanche monobloc (3), puis
- l'assemblage des deux parties d'enveloppe (5, 6) et du film plastique étanche monobloc (3), lequel film plastique étanche (3) est rapporté de sorte à ménager une bande intercalaire (10) entre lesdites parties d'enveloppe (5, 6) constituant les moyens charnière.

10. Procédé selon la revendication 9, **caractérisé en ce que** le film plastique étanche (3) est assemblé sur les deux parties d'enveloppe (5, 6) par une opération de thermoformage, en combinaison avec des moyens d'adhésion (11).

## Patentansprüche

1. Verpackung vom Stil einer Schachtel aus zwei Materialien für das Verpacken eines Produkts, wobei die Verpackung (1) eine äußere Hülle (2) aufweist, die aus zwei Hüllenteilen (5, 6) besteht, die durch ein Scharnier bildende Mittel (10) für deren Bewegung zwischen zwei Positionen verbunden sind, und zwar: - einer geschlossenen Position, die durch lösbare Verriegelungsmittel (12) beibehalten werden kann, um gen-leinsam ein geschlossenes Lagervolumen (1') definieren zu können, das dazu bestimmt ist, das besagte Produkt zu beinhalten, und - einer offenen Position, um den Zugang zum Lagervolumen (1') zu ermöglichen, wobei die beiden Hülsenteile (5, 6) innen mit einem gleichen dichten, einstückigen Plastikfilm (3) bedeckt sind,
**dadurch gekennzeichnet, daß** die beiden Hüllenteile (5, 6) von zwei getrennten Teilen gebildet sind, und daß der dichte Plastikfilm (3) ein Zwischenwand (10) aufweist, das sich zwischen den beiden getrennten Hüllenteilen (5, 6) erstreckt, um die ein Scharnier bildenden Mittel zu bilden.

2. Verpackung vom Stil einer Schachtel aus zwei Materialien gemäß Anspruch 1, **dadurch gekennzeichnet, daß** die äußere Hülle (2) zwei einander gegenüberliegende Bodenwandungen (21) aufweist, die durch eine Seitenwandung (22) verbunden sind, daß jedes der beiden Hülsenteile (5, 6) eine Platte (51, 61) aufweist, die eine der besagten Bodenwandungen (21) bildet, und daß wenigstens eins der Hüllenteile (5, 6) eine Seitenwandung (52, 62) ausweist, die dessen Bodenwandung (51, 61) verlängert, um wenigstens einen Teil der Höhe der Seitenwandung (22) zu bilden.

3. Verpackung vom Stil einer Schachtel aus zwei Materialien gemäß Anspruch 2, dadurch gekenntzeichnet, daß die beiden Hüllenteile (5. 6) zueinander identische oder wenigstens näherungsweise identische Formen aufweisen, von denen jede eine durch eine Seitenwandung (52, 62) verlängerte Bodenplatte (51,61) aufweist.

4. Verpackung vom Stil einer Schachtel aus zwei Materialien gemäß einem der Ansprüche 1 bis 3, dadurch gekenntzeichnet, daß jedes Hüllenteil (5, 6) durch einen Umfangsrand (53, 63) begrenzt ist, der sich in einer Ebene (P, P') erstreckt, daß der dichte Plastikfilm (3) zwei seitliche, vorstehende, einen Umlauf bildende Bänder (83, 93) aufweist, von denen sich jedes über den Umfangsrand (53. 63) des zugehörigen Hüllenteils (5, 6) hinaus und in oder wenigstens näherungsweise in der Ebene (P, P') des Umfangsrands des zugehörigen Hüllenteils erstreckt, wobei die beiden seitlichen, vorstehenden Bänder (83, 93) bei der Belegung der beiden Hüllenteile (5, 6) in die geschlossene Position für deren dichtes Zusammenfügen durch abbaubare Befestigungsmittel (12), die die lösbaren Verriegelungsmittel bilden, übereinander zu liegen kommen.

5. Verpackung vom Stil einer Schachtel aus zwei Materialien gemäß einem der Ansprüche 1 bis 4, **dadurch gekennzeichnet, daß** das Zwischenband (10) des dichten Plastikfilms (3), das die ein Scharnier bildenden Mittel bildet, ein längliches Profilstück (105) aufweist, das die Drehachse (10') zwischen den beiden Hüllenteilen (5, 6) definiert, wobei sich das längliche Profilstück (105) zwischen den beiden Hüllenteilen (5, 6) erstreckt und einen gebogenen Querschnitt aufweist, der auf der Seite einer oberen Oberfläche des dichten Plastikfilms (3) offen ist.

6. Verpackung vom Stil einer Schachtel aus zwei Materialien gemäß einem der Ansprüche 1 bis 4, dadurch gekenntzeichnet, daß das Zwischenband (10) des dichten Plastikfilms (3), das die ein Scharnier bildenden Mittel bildet, eine Sollbruchlinie (102) aufweist, die die Drehachse (10') zwischen den beiden Hüllenteilen (5, 6) definiert, wobei sich die Sollbruchlinie (102) zwischen den beiden Hüllenteilen (5, 6) erstreckt und das Zwischenband in zwei längliche Abschnitte (103) aufteilt, die dazu bestimmt sind, in geschlossener Position übereinander zu liegen.

7. Verpackung vom Stil einer Schachtel aus zwei Materialien gemäß einem der Ansprüche 1 bis 6, dadurch gekenntzeichnet, daß die Hüllenteile (5, 6) mit dem dichten Plastikfilm (3) durch Heftmittel (11) zusammengefügt sind.

8. Verpackung vom Stil einer Schachtel aus zwei Materialien gemäß einem der Ansprüche 1 bis 7, **dadurch gekennzeichnet, daß** jedes der Hüllenteile (5, 6) aus einem auf der Basis von Holzfasern, zum Beispiel aus Karton, hergestellten Stück besteht.

9. Verfahren zum Erhalten einer Verpackung vom Stil einer Schachtel aus zwei Materialien gemäß einem der Ansprüche 1 bis 8, **dadurch gekennzeichnet, daß** es wenigstens die folgenden aufeinanderfolgenden Schritte aufweist:
Bereitstellen der beiden getrennten Hüllenteile (5, 6) und des dichten, einstückigen Plastikfilms (3), dann
Zusammenfügen der beiden Hüllenteile (5, 6) und des dichten, einstückigen Plastikfilms (3), wobei der dichte Plastikfilm (3) so angebracht wird, daß ein Zwischenband (10) zwischen den beiden Hüllenteilen (5, 6) geschaffen wird, das die ein Scharnier bildenden Mittel bildet.

10. Verfahren gemäß Anspruch 9, dadurch gekenntzeichnet, daß der dichte Plastikfilm (3) auf den beiden Hüllenteilen (5, 6) durch einen Thermoformvorgang, zusammen mit Haftmitteln (11), angebracht wird.

## Claims

1. A package of the two-material box type for the packaging of a product, which package (1) includes an outer envelope (2) that is composed of two envelope parts (5, 6) connected by hinge means (10) for their moving between two positions: - a closed position, held by releasable locking means (12), to define together a closed storage volume (1') intended to contain said product, and - an open position, to allow the access to said storage volume (1'), which two envelope parts (5, 6) are internally covered with a same one-piece tight plastic film (3),
**characterized in that** said two envelope parts (5, 6) are consisted by two distinct pieces, and **in that** said tight plastic film (3) includes an insert strip (10), extending between said two distinct envelope parts (5, 6), to form said hinge means.

2. Package of the two-material box type according to claim 1, **characterized in that**, in the closed position, the outer envelope (2) has two opposite bottom walls (21) that are connected by a lateral wall (22), **in that** the two envelope parts (5, 6) each include a panel (51, 61) forming one of said bottom walls (21), and **in that** at least one of said envelope parts (5, 6) include a lateral wall (52, 62) extending its bottom panel (51, 61) to form at least a part of the height of said lateral wall (22).

3. Package of the two-material box type according to claim 2, **characterized in that** the two envelope parts (5, 6) have shapes that are identical or at least approximately identical, relative to each other, each comprising a bottom panel (51, 61) extended by a lateral wall (52, 62).

4. Package of the two-material box type according to any one of claims 1 to 3, **characterized in that** each envelope part (5, 6) is delimited by a peripheral border (53, 63) extending in a plane (P, P'), **in that** the tight plastic film (3) includes two protruding lateral strips (83, 93), forming sideways, which are each extended beyond the peripheral border (53, 63) of the associated envelope part (5, 6) and which each extend in or at least substantially in the plane (P, P') of the peripheral border of the associated envelope part, which two protruding lateral strips (83, 93) are superimposed on each other during the moving of said envelope parts (5, 6) to the closed position, for their tight assembly by degradable fastening means (12) forming the removable locking means.

5. Package of the two-material box type according to any one of claims 1 to 4, **characterized in that** the insert strip (10) of the tight plastic film (3), forming said hinge means, includes a longitudinal ridge (105) defining the axis of rotation (10') between the two envelope parts (5, 6), which longitudinal ridge (105) extends between the two envelope parts (5, 6) and has a curved cross-section opening of the side of an upper surface of said tight plastic film (3).

6. Package of the two-material box type according to any one of claims 1 to 4, **characterized in that** the insert strip (10) of the tight plastic film (3), forming said hinge means, includes a score line (102) defining the axis of articulation (10') between the two envelope parts (5, 6), which score line (102) extends between the two envelope parts (5, 6) and divides said insert strip into two longitudinal sections (103) intended to be superimposed on each other in the closed position.

7. Package of the two-material box type according to any one of claims 1 to 6, **characterized in that** the envelope parts (5, 6) are assembled with the tight plastic film (3) through adhesion means (11).

8. Package of the two-material box type according to any one of claims 1 to 7, **characterized in that** the envelope parts (5, 6) each consist in a piece made from wood fibres, for example cardboard.

9. Method for obtaining a package of the two-material box type according to any one of claims 1 to 8, **characterized in that** it comprises at least the following successive steps:
- providing the two distinct envelope parts (5, 6), and the one-piece tight plastic film (3), and
- assembling the two envelope parts (5, 6) and the one-piece tight plastic film (3), which tight plastic film (3) is added so as to make an insert strip (10) between said envelope parts (5, 6), forming the hinge means.

10. Method according to claim 9, **characterized in that** the tight plastic film (3) is assembled on the two envelope parts (5, 6) by a thermoforming operation, in combination with adhesion means (11).
